# EUROPEAN PATENT SPECIFICATION

(11) **EP 3 599 082 B1**
(45) Date of publication and mention of the grant of the patent: **07.12.2022**
(21) Application number: 18186172.5
(22) Date of filing: 27.07.2018
(51) Int. Cl.: B29C 64/371, B29C 64/153, B33Y 10/00, B33Y 30/00, B33Y 40/00, B22F 10/20

(54) **APPARATUS FOR ADDITIVELY MANUFACTURING THREE-DIMENSIONAL OBJECTS**
VORRICHTUNG ZUR GENERATIVEN FERTIGUNG VON DREIDIMENSIONALEN OBJEKTEN
APPAREIL DE FABRICATION ADDITIVE D'OBJETS TRIDIMENSIONNELS

(43) Date of publication of application: 29.01.2020
(73) Proprietor: Concept Laser GmbH, 96215 Lichtenfels (DE)
(72) Inventor: Pröbstle, Martin, 96114 Hirschaid (DE); Appel, Peter, 96047 Bamberg (DE); Mahr, Jochen, 96215 Lichtenfels (DE); Strößner, Johannes, 95126 Schwarzenbach/Saale (DE); Rommel, Daniel, 95447 Bayreuth (DE)
(74) Representative: Hafner & Kohl PartmbB

(56) References cited:
- EP-A1- 2 730 353
- WO-A1-2017/134044
- WO-A2-2014/202413
- US-A1- 2017 239 718

## Description

The invention relates to an apparatus for additively manufacturing three-dimensional objects by means of successive layerwise selective irradiation and consolidation of layers of a build material which can be consolidated by means of an energy source, which apparatus comprises a stream generating device that is adapted to generate a gas stream inside a process chamber of the apparatus. Apparatuses for additively manufacturing three-dimensional objects in which build material can selectively be consolidated to form a three-dimensional object in a layerwise successive manner are generally known from prior art. Typically, a stream generating device is provided for generating a gas stream inside a process chamber of the apparatus, i.e. the chamber in which the additive manufacturing process is performed.

Usually, the gas stream is or comprises an inert gas for making the inside of the process chamber inert and for transporting residues that are generated in the additive manufacturing process out of the process chamber to avoid that such residues negatively influence the additive manufacturing process. Thus, stream generating devices are used in prior art to reduce impurities, such as gaseous components, in the gas stream to a minimum, which components could react with the build material inside the process chamber, such as oxygen.

US2017/239718 A1 discloses an apparatus according to the preamble of claim 1 and a method according to the preamble claim 13.

It is an object of the present invention to provide an apparatus for additively manufacturing three-dimensional objects, wherein the provision of the gas stream is improved.

The object is inventively achieved by an apparatus according to claim 1 and a method according to claim 13.

Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, as described before, which is adapted to generate a gaseous fluid stream at least partly streaming through the process chamber with given streaming properties, e.g. a given streaming profile, streaming velocity, etc. The gaseous fluid stream is, inter alia, capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that the stream generating device is adapted to control at least one parameter relating to a composition of the gas stream. The "parameter" in the scope of this application may also be referred to as atmosphere parameter, as the parameter directly relates to a composition of the gas stream that streams through the process chamber and therefore, controls or defines the atmosphere inside the process chamber. Thus, it is inventively achieved that the composition of the gas stream may be adjusted or controlled by controlling the at least one parameter that relates to the composition of the gas stream. It is possible to directly influence how the gas stream is composed or directly influence several components of the gas stream via the stream generating device, respectively. The stream generating device comprises a control unit which is adapted to control the parameter. For example, the stream generating device may receive respective signals from the control unit in that the stream generating device is adapted to control the composition of the gas stream.

As described before, the gas stream may comprise several components, in particular an inert gas, such as argon or nitrogen or carbon dioxide. It is also possible that the stream generating device may add other components that can interact or react with the build material, for instance. Thus, instead of merely purifying an inert gas, i.e. removing all other components from the gas stream except of the inert gas, it is inventively achieved that (gaseous) aggregates can specifically be added or removed from the gas stream. Therefore, the composition of the gas stream can be adjusted to achieve a desired influence of the gas stream, for example a component of the gas stream, on the additive manufacturing process.

For example, the gas stream having a defined composition, e.g. comprising a specific concentration of at least one component, may influence the consolidation behavior of the build material, as it is selectively consolidated in the additive manufacturing process. By controlling the parameter and thereby controlling the composition of the gas stream, it is possible to directly influence the consolidation behavior of the build material in the consolidation process. Further, it is possible to control properties of the three-dimensional object that is additively built in the additive manufacturing process, by controlling the parameter, as the composition of the gas stream defines the (mechanical or chemical) properties of the three-dimensional object, as well. Hence, properties of the object, such as the ductility or hardness of the object, can precisely be controlled by controlling the composition of the gas stream, e.g. by adding specific components to the gas stream and therefore, adding the components to the atmosphere under which the build material is consolidated.

Preferably, the stream generating device may be adapted to control a chemical composition of the gas stream, in particular adapted to adjust a defined chemical composition of the gas stream. As described before, the stream generating device may comprise a means to add or remove components to or from the gas stream to adjust or control a chemical composition of the gas stream. Advantageously, the stream generating device may be adapted to adjust a defined chemical composition of the gas stream, for example a chemical composition of the gas stream that is needed for achieving defined properties of the three-dimensional object.

It is possible to control a ratio of oxygen in an additive manufacturing process, for example using titanium (alloys) as build material. It is also possible to use nitrogen in the gas stream, e.g. if steel is used as build material. By controlling the ratio of oxygen in the additive manufacturing process, it is possible to tailor properties of the object, such as the ductility, the hardness or the tensile strength, for instance. By providing a low oxygen content in the gas stream, the ductility of the object can be increased, whereas a higher oxygen content may be used to achieve a higher hardness of the object. Thus, specifically tailored mechanical or chemical properties of the object can be achieved by adjusting the chemical composition of the gas stream.

The inventive apparatus can further be improved in that the stream generating device may be adapted to control the concentration of at least one component of the gas stream, in particular a gaseous component. The stream generating device of the inventive apparatus may therefore, be adapted to control the concentration of at least one component of the gas stream, for example to increase the concentration of the component with regard to the entire gas stream. Thus, it is possible to add a gaseous component to the gas stream, i.e. to the atmosphere inside the process chamber, thereby increasing the amount or the ratio of the respective component. It is also possible to reduce a gaseous component of the gas stream, for example by adding other components of the gas stream and thereby, replacing the component which needs to be reduced. It is also possible to stop adding (or reduce the concentration of) the gaseous component to (in) the gas stream and rinsing the process chamber with the gas stream lacking the respective gaseous component.

According to the invention, the stream generating device is adapted to spatially and optionally timely control the parameter, in particular the concentration of at least one component of the gas stream. Therefore, it is possible to vary the composition of the gas stream, in particular the concentration of at least one component of the gas stream over time, wherein it is additionally possible to control the parameter locally, i.e. varying or controlling the parameter differently for two different positions or regions inside the process chamber. By timely controlling the parameter, i.e. timely controlling the composition of the gas stream, it is possible to adjust a defined (chemical) composition of the gas stream for a defined time period, e.g. a time window, for example for the additive manufacturing process, in particular the irradiation process step, of a part of the object, for example a defined number of layers. For example, the concentration of at least one component of the gas stream may be increased for irradiating at least one layer, wherein after the layer has been irradiated, it is possible to again reduce the concentration of the respective component.

By spatially controlling the parameter, i.e. locally controlling the composition of the gas stream inside the process chamber, it is possible to adjust a defined (chemical) composition of the gas stream for or in a specific region inside the process chamber. Thus, it is possible to generate different atmospheres for different regions of the same layer of the object in that different regions of the object are manufactured under different conditions, in particular under different atmospheres. Thus, the mechanical properties of the object can also vary locally allowing for locally "tailored" properties of the object.

The stream generating device is adapted to control the parameter, in particular the concentration of at least one component of the gas stream, differently for at least two layers of build material. Thus, it is possible to timely and locally vary the composition of the gas stream in that at least two layers of build material are irradiated under different conditions, in particular under different atmospheres resulting in different (mechanical) properties of the object in those areas related to the at least two layers. For example, a first section of the object is irradiated with the gas stream comprising a first composition, whereas a second section of the object is irradiated with the gas stream comprising a second composition. Thus, the first section of the object will comprise first (mechanical or chemical) properties, whereas the second section of the object comprises second (mechanical or chemical) properties. Hence, it is possible to vary the properties of the object over the height of the object, wherein the variation of the composition of the gas stream can be performed timely and/or locally. The resulting object may comprise a structure similar to a composite component, as the object is built of at least two, in particular a plurality of layers comprising different mechanical or chemical properties.

It is particularly possible to control the parameter, e.g. vary the composition of the gas stream, alternatingly for a defined number of layers, in particular layerwise. Thus, the parameter may be adjusted differently for a group of layers or every layer, for example alternatingly. Thus, two mechanical properties can be combined and achieved in the additively built object, such as combining layers with high ductility with layers with higher hardness or the like to specifically tailor the properties of the resulting three-dimensional object.

According to the invention, the stream generating device is adapted to control the parameter, in particular the concentration of at least one component of the gas stream, differently for at least two regions of the same layer. Thus, it is possible to additionally or alternatively adjust the composition of the gas stream streaming over two or more regions of the same layer differently. Hence, controlling the parameter for at least two regions of the same layer differently allows for tailoring the properties of the object in the regions of the corresponding layer individually. Therefore, the properties of the object may not only be tailored over the height of the object but spatially for each layer for each group of layers.

The stream generating device may further be adapted to control the parameter, in particular the concentration of at least one component of the gas stream, differently for a core region and a shell region of the object. According to this embodiment, it is possible to control the properties of the object differently for a core region and a shell region of the object. The core region of the object is deemed as a region related with the inner volume of the object, whereas the shell region of the object can be deemed as the region surrounding the core region. For example, the parameter may be controlled in that during the irradiation of the core region the concentration of at least one component of the gas stream may be controlled differently from the irradiation of the shell region.

For instance, while irradiating the core region, the concentration of at least one component of the gas stream may be reduced compared to the irradiation of the shell region, whereas the concentration of the same or another component may be increased while irradiating the shell region (compared to the irradiation of the core region). For example, if a titanium alloy is irradiated, a higher ductility in a core region of the object can be achieved by lowering the oxygen content in the gas stream, whereas during the irradiation of a skin or a shell region a higher hardness can be achieved by increasing the oxygen content in the gas stream. Thus, the properties of the object in the core region and the shell region can specifically and individually be adjusted ("tailored") to achieve the desired properties of the object, for example a higher ductility in the core region and a higher hardness in the shell region.

The stream generating device may further be adapted to control the parameter, in particular the concentration of at least one component of the gas stream, differently for at least a first irradiation step and at least a second irradiation step. The control of the parameter differently for at least two (succeeding) irradiation steps allows for irradiating structures in the same or different layers under different conditions, in particular under different atmospheres. Thus, the properties of those structures that are irradiated under different atmospheres, in particular under different gas streams, can accordingly be adjusted individually. In particular, it is possible to perform a first irradiation step with the gas stream comprising a first composition, wherein a second irradiation step can be performed with the gas stream comprising a second composition, in particular differing from the first composition.

Thus, after the first irradiation step is finished, the stream generating device may increase or decrease one or more components of the gas stream to adjust the desired second composition, wherein the second irradiation step may be performed while the gas stream comprising the second composition is streamed over the respective region of build material. It is also possible to perform the first irradiation step and the second irradiation step simultaneously, wherein the irradiation steps are performed locally limited, for example in two different regions of the same build plane, wherein the gas streams are generated differently for both regions.

Preferably, the stream generating device may be adapted to add a, in particular gaseous, component to the gas stream. For example, it is possible to add gaseous components, such as oxygen and/or nitrogen and/or carbon, e.g. carbon dioxide, to the gas stream. The control of the concentration of each gaseous component can preferably be performed dependent on the build material that is used in the additive manufacturing process, for example steel, titanium, aluminum or the like. As the different aggregates that can be added to the gas stream or removed from the gas stream, respectively, comprise different influences on the build material and the consolidation behavior of the build material, it is possible to tailor the (mechanical or chemical) properties of the object in the corresponding region of the object that is currently irradiated.

The inventive apparatus may further be improved in that the stream generating device may be adapted to add the (gaseous) component to the gas stream inside or outside the process chamber, in particular into at least one pipe or channel arranged outside the process chamber or via an opening arranged inside the process chamber, in particular orifice. Thus, it is possible to add the component to the gas stream outside the process chamber, for example into a pipe structure or a channel structure of the stream generating device through which the gas stream is guided, wherein a functional component of the gas stream may be connected with a reservoir of the specific component, for example via a valve. By controlling the valve it is possible to control the volume of the gaseous component that is added to the gas stream and therefore, control the concentration of the component in the gas stream.

It is also possible to have an opening, in particular an orifice, that extends into the process chamber allowing for increasing the concentration of the component of the gas stream directly inside the process chamber, for example locally adjusting the composition of the gas stream. According to the invention, an intake and a corresponding outlet are provided that can be moved over the build plane in which build material is applied to be irradiated. Hence, it is possible to move the corresponding intake and the outlet over an area that has to be irradiated, wherein a gas stream comprising a defined composition can be streamed between the intake and the outlet allowing for locally adjusting the composition of the atmosphere in that the region beneath the corresponding intake and the outlet can be irradiated under this specific atmosphere.

According to another embodiment of the inventive apparatus, the stream generating device may be adapted to determine the parameter, in particular the composition of the gas stream, and to control the parameter, in particular a concentration of at least one component of the gas stream, dependent on the determined parameter. Thus, a closed loop control of the parameter that relates to the composition of the gas stream is feasible, wherein the stream generating device may determine the parameter, for example the composition of the gas stream and control the composition of the gas stream, for example via an adjustment to the concentration of at least one component of the gas stream. Thus, the atmosphere in the process chamber can be controlled by varying at least one component of the gas stream, for example increasing or reducing a ratio of a component of the gas stream to adjust a defined chemical composition of the gas stream streaming through at least one region of the process chamber. As described before, the closed loop control can be performed timely and/or spatially different for at least two irradiation steps.

The stream generating device of the inventive apparatus may further be adapted to adjust a concentration of at least one component of the gas stream, in particular every component, deviant from a minimum. Thus, the stream generating device is not only adapted to reduce a specific component of the gas stream to a minimum, in particular to remove a specific component from the gas stream, but it is possible to adjust a concentration of at least one component of the gas stream deviant from a minimum, for example by adding a gaseous component to the gas stream, as described before. The adjustment of the concentration of at least one component of the gas stream, in particular every component, allows for adjusting a specific chemical composition of the gas stream, instead of merely "purifying" a stream of an inert gas by removing undesired components from the gas stream, as known from prior art.

Further, the invention relates to a method according to claim 13 for operating at least one apparatus for additively manufacturing three-dimensional objects.

Exemplary embodiments of the invention are described with reference to the Fig. The Fig. are schematic diagrams, wherein
- Fig. 1: shows an inventive apparatus according to a first embodiment, which is not in the scope of the claimed invention; and
- Fig. 2: shows an inventive apparatus according to a second embodiment.

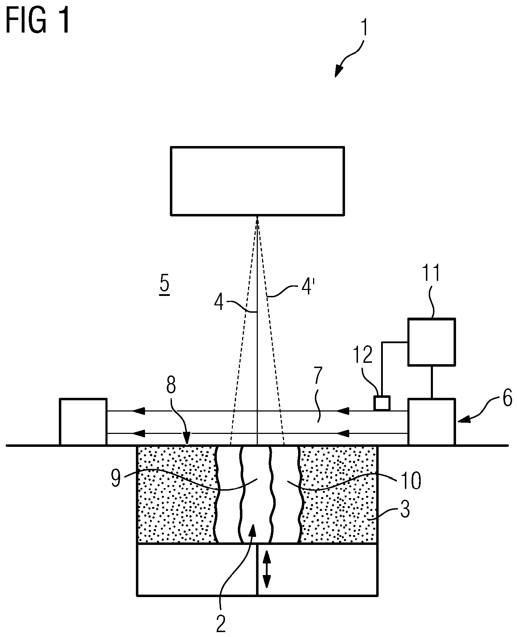

Fig. 1 shows an apparatus 1 for additively manufacturing three-dimensional objects 2 by means of successive layerwise selective irradiation and consolidation of layers of a build material 3 which can be consolidated by means of an energy source, such as an energy beam 4, 4'. The apparatus 1 comprises a process chamber 5 in which the additive manufacturing process is performed, wherein a stream generating device 6 is provided for generating a gas stream 7 that streams through the process chamber 5 of the apparatus 1.

The stream generating device 6 is adapted to control the composition of the gas stream 7, for example by controlling the concentration of one or more components in the gas stream 7, e.g. adding gaseous components to the gas stream 7. In particular, the stream generating device 6 is adapted to selectively add oxygen, nitrogen and carbon dioxide to the gas stream 7. As the gas stream 7 streams over a build plane 8 in which the build material 3 is layerwise applied to be irradiated via the energy beam 4, 4', the gas stream 7 defines the atmosphere under which the build material 3 is consolidated to form the object 2.

By adjusting the chemical composition of the gas stream 7 it is possible to adjust the atmosphere under which the build material 3 is consolidated, thereby directly influencing the consolidation behavior of the build material 3 which results in a control or an adjustment of the mechanical and chemical properties of the object 2. In other words, it is possible to "tailor" the mechanical and chemical properties of the object 2 by adjusting the chemical composition of the gas stream 7 streaming over the build plane 8, while the build material 3 is irradiated.

According to a first exemplary embodiment that is depicted in Fig. 1, the object 2 comprises two regions 9, 10, wherein the region 9 may be referred to as "core region" and the region 10 may be referred to as "shell region" or "skin region", respectively, in this exemplary embodiment. Of course, it is also possible to arbitrarily arrange two regions 9, 10 different from the embodiment depicted in Fig. 1. It is achieved that the mechanical and chemical properties of the object 2 in the regions 9, 10 are different from each other, wherein the irradiation steps irradiating the several layers of build material 3 forming the regions 9, 10 of the object 2 can be performed under different conditions, in particular under different atmospheres by adjusting the composition of the gas stream 7 that streams over the build plane 8, while the specific regions 9, 10 are irradiated. Thus, the consolidation behavior of the build material 3 forming the regions 9, 10 is adjusted via the adjusted composition of the gas stream 7.

For example, while the region 9 of the actual layer of build material 3 that is arranged in the build plane 8 is irradiated via the energy beam 4, a first chemical composition of the gas stream 7 can be adjusted via the stream generating device 6. Hence, the build material 3 in the region 9 is irradiated while the gas stream 7 with the first chemical composition streams over the region 9. After the irradiation of the region 9 of the actual layer of build material 3 is completed, the composition of the gas stream 7 can be adjusted via the stream generating device 6, for example adjusting a second composition of the gas stream 7. The gas stream 7 with the second composition streams over the build plane 8, while the second region 10 is irradiated, for example via the energy beam 4'. Of course, the procedure can be repeated for each layer of build material 3 forming the object 2 consisting of the first region 9 and the second region 10.

For example, a titanium alloy is used as build material 3, wherein oxygen can be added to the gas stream 7, while the region 10, i.e. the skin region or shell region, respectively, is irradiated. The oxygen content can again be reduced, while the region 9 is irradiated, i.e. the core region. This results in a higher ductility of the core region compared with the skin region and a higher hardness of the skin region compared with the core region. Thus, the mechanical properties of the object 2 can be tailored, as needed, via an adjustment or a control, respectively, of the composition of the gas stream 7.

The stream generating device 6 further is connected with a control unit 11 that is adapted to determine a parameter relating to the composition of the gas stream 7, in particular a determination of the concentration of several components of the gas stream 7. To perform the determination of the composition of the gas stream 7, the control unit 11 is connected with a gas sensor 12 that is adapted to determine the concentration of several components of the gas stream 7.

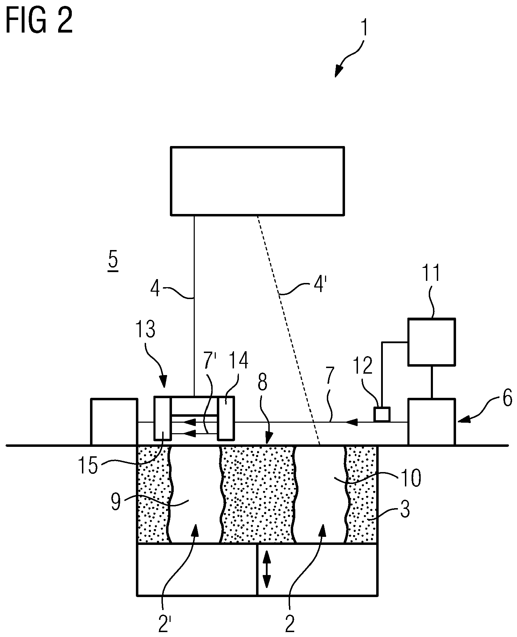

Fig. 2 shows an apparatus 1 that is generally built the same way as the apparatus 1, that is depicted in Fig. 1, therefore, the same reference signs are used. The apparatus 1 comprises a stream generating device 6 that generates the gas stream 7 between an intake and an outlet, for example arranged on opposing sides of the build plane 8. According to the exemplary embodiment that is depicted in Fig. 2, two objects 2, 2' are to be manufactured in the additive manufacturing process. For example, the irradiation device is adapted to generate two energy beams 4, 4', wherein it is also possible to generate one energy beam 4, 4' for manufacturing both objects 2, 2'. The regions 9, 10 of the build plane 8 in which the objects 2, 2' are additively built, can also be deemed as different regions 9, 10, as described before.

Again, the stream generating device 6 is adapted to adjust the composition of the gas stream 7 that streams through the process chamber 5, in particular streams over the build plane 8. It is possible to timely adjust the composition of the gas stream 7. Further, the apparatus 1, in particular the stream generating device 6, comprises a stream generating unit 13, for example comprising an opening, such as an orifice. The stream generating unit 13 therefore, provides a stream intake 14 and a stream outlet 15 that are arranged on a common frame, for instance. The stream generating unit 13 can be moved relative to the build plane 8 to a region 9, 10 in which build material 3 has to be irradiated.

According to the invention, the stream generating unit 13 is moved to the position of the object 2', i.e. the region 9, to provide a gas stream 7' that differs from the gas stream 7 regarding the chemical composition of the gas streams 7, 7'.

In other words, the stream generating unit 13 allows for locally adjusting the composition of the atmosphere in the process chamber 5 via an adjustment to the composition of the gas stream 7', e.g. by adding or removing components of the gas stream 7' to "tailor" an atmosphere over the build plane 8, in particular the region 9 of the build plane 8 in which the object 2' is irradiated. Simultaneously, the stream generating device 6 is adapted to adjust the composition of the gas stream 7 streaming over the build plane 8, in particular the region 10 of the build plane 8 in which the object 2 is irradiated via the energy beam 4'.

Further, it is possible to timely and spatially adjust the composition of the gas streams 7, 7', as needed. For example, a layerwise adjustment of the composition of the gas streams 7, 7' is feasible. In particular, it is possible to control the composition of the gas streams 7, 7' differently for at least two layers of build material 3 and/or for at least two regions 9, 10 of the same or different layers of build material 3. As described before with respect to the core and shell irradiation or irradiating the regions 9, 10 differently, it is also possible to have two different irradiation steps, wherein the concentration of at least one component of the gas stream 7, 7' can be controlled differently for the at least two different irradiation steps. Hence, it is possible to "tailor" the mechanical and chemical properties of the object 2, 2' by controlling the composition of the gas streams 7, 7'. Self-evidently, the stream generating unit 13 can be moved to any arbitrary position relative to the build plane 8, e.g. the regions 9, 10.

## Claims

1. Apparatus (1) for additively manufacturing three-dimensional objects (2, 2') by means of successive layerwise selective irradiation and consolidation of layers of a build material (3) which can be consolidated by means of an energy source, which apparatus (1) comprises a stream generating device (6) that is adapted to generate a gas stream (7, 7') inside a process chamber (5) of the apparatus (1), wherein the stream generating device (6) is adapted to spatially control at least one parameter relating to a composition of the gas stream (7, 7'),
**characterized in that**
the stream generating device (6) further comprises a control unit which is adapted to control the composition of the gas stream (7, 7') and **in that**
the stream generating device (6) comprises a stream generating unit (13) that provides a stream intake (14) and a stream outlet (15), the stream generating unit (13) being moveable to the position of the object (2, 2') to provide a gas stream (7') between the intake (14) and the outlet (15) that differs from the gas stream (7) of the stream generating device (6) regarding the chemical composition of the gas streams (7, 7').

2. Apparatus according to claim 1, **characterized in that** the stream generating device (6) is adapted to control a chemical composition of the gas stream (7, 7'), in particular to adjust a defined chemical composition of the gas stream (7, 7').

3. Apparatus according to one of the preceding claims, **characterized in that** the stream generating device (6) is adapted to control a concentration of at least one component of the gas stream (7, 7'), in particular a gaseous component.

4. Apparatus according to one of the preceding claims, **characterized in that** the stream generating device (6) is adapted to timely control the parameter, in particular the concentration of at least one component of the gas stream (7, 7').

5. Apparatus according to one of the preceding claims, **characterized in that** the stream generating device (6) is adapted to control the parameter, in particular the concentration of at least one component of the gas stream (7, 7'), differently for at least two layers of build material (3).

6. Apparatus according to one of the preceding claims, **characterized in that** the stream generating device (6) is adapted to control the parameter alternatingly for a defined number of layers, in particular layerwise.

7. Apparatus according to one of the preceding claims, **characterized in that** the stream generating device (6) is adapted to control the parameter, in particular the concentration of at least one component of the gas stream (7, 7'), differently for a core region (9) and a shell region (10) of the object (2, 2').

8. Apparatus according to one of the preceding claims, **characterized in that** the stream generating device (6) is adapted to control the parameter, in particular the concentration of at least one component of the gas stream (7, 7'), differently for at least a first irradiation step and at least a second irradiation step.

9. Apparatus according to one of the preceding claims, **characterized in that** the stream generating device (6) is adapted to add a, in particular gaseous, component to the gas stream (7, 7').

10. Apparatus according to one of the preceding claims, **characterized in that** the stream generating device (6) is adapted to add the component to the gas stream (7, 7') inside or outside the process chamber (5), in particular into at least one pipe or channel.

11. Apparatus according to one of the preceding claims, **characterized in that** the stream generating device (6) is adapted to determine the parameter, in particular the composition of the gas stream (7, 7'), and to control the parameter, in particular a concentration of at least one component of the gas stream (7, 7'), dependent on the determined parameter.

12. Apparatus according to one of the preceding claims, **characterized in that** the stream generating device (6) is adapted to adjust a concentration of at least one component of the gas stream (7, 7'), in particular every component, deviant from a minimum.

13. Method for operating at least one apparatus (1) for additively manufacturing three-dimensional objects (2, 2') by means of successive layerwise selective irradiation and consolidation of layers of a build material (3) which can be consolidated by means of an energy source, in particular an apparatus (1) according to one of the claims 1 to 13, which apparatus (1) comprises a stream generating device (6) that is adapted to generate a gas stream (7, 7') inside a process chamber (5) of the apparatus (1), wherein at least one parameter relating to a composition of the gas stream (7, 7') is spatially controlled, and **characterized in that**
the stream generating device (6) comprises a control unit which is adapted to control the composition of the gas stream (7, 7') and **in that** the stream generating device (6) further comprises a stream generating unit (13) that provides a stream intake (14) and a stream outlet (15), wherein the stream generating unit (13) is moved to the position of the object (2, 2') to provide a gas stream (7') between the intake (14) and the outlet (15) that differs from the gas stream (7) of the stream generating device (6) regarding the chemical composition of the gas streams (7, 7').

## Patentansprüche

1. Vorrichtung (1) zum additiven Herstellen dreidimensionaler Objekte (2, 2') mittels aufeinanderfolgender schichtweiser selektiver Bestrahlung und Verfestigung von Schichten eines Aufbaumaterials (3), das mittels einer Energiequelle verfestigt werden kann, wobei die Vorrichtung (1) eine Stromerzeugungsvorrichtung (6) aufweist, die derart eingerichtet ist, dass sie einen Gasstrom (7, 7') innerhalb einer Prozesskammer (5) der Vorrichtung (1) erzeugt, wobei die Stromerzeugungsvorrichtung (6) derart eingerichtet ist, dass sie zumindest einen Parameter bezüglich einer Zusammensetzung des Gasstroms (7, 7') räumlich steuert,
**dadurch gekennzeichnet, dass**
die Stromerzeugungsvorrichtung (6) ferner eine Steuereinheit aufweist, die derart eingerichtet ist, dass sie die Zusammensetzung des Gasstroms (7, 7') steuert, und dass
die Stromerzeugungsvorrichtung (6) eine Stromerzeugungseinheit (13) aufweist, die einen Stromeinlass (14) und einen Stromauslass (15) bereitstellt, wobei die Stromerzeugungseinheit (13) zur Position des Objekts (2, 2') bewegbar ist, um einen Gasstrom (7') zwischen dem Einlass (14) und dem Auslass (15) bereitzustellen, der sich von dem Gasstrom (7) der Stromerzeugungsvorrichtung (6) hinsichtlich der chemischen Zusammensetzung der Gasströme (7, 7') unterscheidet.

2. Vorrichtung nach Anspruch 1, **dadurch gekennzeichnet, dass** die Stromerzeugungsvorrichtung (6) derart eingerichtet ist, dass sie eine chemische Zusammensetzung des Gasstroms (7, 7') steuert, insbesondere um eine definierte chemische Zusammensetzung des Gasstroms (7, 7') einzustellen.

3. Vorrichtung nach einem der vorhergehenden Ansprüche, **dadurch gekennzeichnet, dass** die Stromerzeugungsvorrichtung (6) derart eingerichtet ist, dass sie eine Konzentration von zumindest einer Komponente des Gasstroms (7, 7'), insbesondere einer gasförmigen Komponente, steuert.

4. Vorrichtung nach einem der vorhergehenden Ansprüche, **dadurch gekennzeichnet, dass** die Stromerzeugungsvorrichtung (6) derart eingerichtet ist, dass sie den Parameter, insbesondere die Konzentration zumindest einer Komponente des Gasstroms (7, 7'), zeitlich steuert.

5. Vorrichtung nach einem der vorhergehenden Ansprüche, **dadurch gekennzeichnet, dass** die Stromerzeugungsvorrichtung (6) derart eingerichtet ist, dass sie den Parameter, insbesondere die Konzentration zumindest einer Komponente des Gasstroms (7, 7'), für zumindest zwei Schichten von Aufbaumaterial (3) unterschiedlich steuert.

6. Vorrichtung nach einem der vorhergehenden Ansprüche, **dadurch gekennzeichnet, dass** die Stromerzeugungsvorrichtung (6) derart eingerichtet ist, dass sie den Parameter für eine definierte Anzahl von Schichten, insbesondere schichtweise, alternierend steuert.

7. Vorrichtung nach einem der vorhergehenden Ansprüche, **dadurch gekennzeichnet, dass** die Stromerzeugungsvorrichtung (6) derart eingerichtet ist, dass sie den Parameter, insbesondere die Konzentration zumindest einer Komponente des Gasstroms (7, 7'), für einen Kernbereich (9) und einen Hüllbereich (10) des Objekts (2, 2') unterschiedlich steuert.

8. Vorrichtung nach einem der vorhergehenden Ansprüche, **dadurch gekennzeichnet, dass** die Stromerzeugungsvorrichtung (6) derart eingerichtet ist, dass sie den Parameter, insbesondere die Konzentration zumindest einer Komponente des Gasstroms (7, 7'), für zumindest einen ersten Bestrahlungsschritt und zumindest einen zweiten Bestrahlungsschritt unterschiedlich steuert.

9. Vorrichtung nach einem der vorhergehenden Ansprüche, **dadurch gekennzeichnet, dass** die Stromerzeugungsvorrichtung (6) derart eingerichtet ist, dass sie dem Gasstrom (7, 7') eine, insbesondere gasförmige, Komponente hinzufügt.

10. Vorrichtung nach einem der vorhergehenden Ansprüche, **dadurch gekennzeichnet, dass** die Stromerzeugungsvorrichtung (6) derart eingerichtet ist, dass sie die Komponente dem Gasstrom (7, 7') innerhalb oder außerhalb der Prozesskammer (5), insbesondere in zumindest ein Rohr oder einen Kanal, hinzufügt.

11. Vorrichtung nach einem der vorhergehenden Ansprüche, **dadurch gekennzeichnet, dass** die Stromerzeugungsvorrichtung (6) derart eingerichtet ist, dass sie den Parameter, insbesondere die Zusammensetzung des Gasstroms (7, 7'), bestimmt und den Parameter, insbesondere eine Konzentration zumindest einer Komponente des Gasstroms (7, 7'), in Abhängigkeit von dem bestimmten Parameter steuert.

12. Vorrichtung nach einem der vorhergehenden Ansprüche, **dadurch gekennzeichnet, dass** die Stromerzeugungsvorrichtung (6) derart eingerichtet ist, dass sie eine von einem Minimum abweichende Konzentration zumindest einer Komponente des Gasstroms (7, 7'), insbesondere jeder Komponente, einstellt.

13. Verfahren zum Betreiben zumindest einer Vorrichtung (1) zum additiven Herstellen dreidimensionaler Objekte (2, 2') durch aufeinanderfolgende schichtweise selektive Bestrahlung und Verfestigung von Schichten eines mittels einer Energiequelle verfestigbaren Aufbaumaterials (3), insbesondere einer Vorrichtung (1) nach einem der Ansprüche 1 bis 13, wobei die Vorrichtung (1) eine Stromerzeugungsvorrichtung (6) aufweist, die derart eingerichtet ist, dass sie einen Gasstrom (7, 7') innerhalb einer Prozesskammer (5) der Vorrichtung (1) erzeugt, wobei zumindest ein Parameter bezüglich einer Zusammensetzung des Gasstroms (7, 7') räumlich gesteuert wird, und **dadurch gekennzeichnet, dass**
die Stromerzeugungsvorrichtung (6) eine Steuereinheit umfasst, die derart eingerichtet ist, dass sie die Zusammensetzung des Gasstroms (7, 7') steuert, und dass
die Stromerzeugungsvorrichtung (6) ferner eine Stromerzeugungseinheit (13) aufweist, die einen Stromeinlass (14) und einen Stromauslass (15) bereitstellt, wobei die Stromerzeugungseinheit (13) zur Position des Objekts (2, 2') bewegt wird, um einen Gasstrom (7') zwischen dem Einlass (14) und dem Auslass (15) bereitzustellen, der sich von dem Gasstrom (7) der Stromerzeugungsvorrichtung (6) hinsichtlich der chemischen Zusammensetzung der Gasströme (7, 7') unterscheidet.

## Revendications

1. Appareil (1) de fabrication additive d'objets tridimensionnels (2, 2') au moyen d'une exposition sélective successive couche par couche et d'une solidification de couches d'un matériau de construction (3) qui peut être solidifié au moyen d'une source d'énergie, lequel appareil (1) comprend un dispositif de production de flux (6) qui est adapté pour produire un flux de gaz (7, 7') à l'intérieur d'une chambre de traitement (5) de l'appareil (1), dans lequel le dispositif de production de flux (6) est adapté pour commander spatialement au moins un paramètre concernant une composition du flux de gaz (7, 7'),
**caractérisé en ce que**
le dispositif de production de flux (6) comprend en outre une unité de commande qui est adaptée pour commander la composition du flux de gaz (7, 7'), et **en ce que**
le dispositif de production de flux (6) comprend une unité de production de flux (13) qui fournit une admission de flux (14) et une sortie de flux (15), l'unité de production de flux (13) pouvant être déplacée vers la position de l'objet (2, 2') pour fournir un flux de gaz (7') entre l'admission (14) et la sortie (15) qui diffère du flux de gaz (7) du dispositif de production de flux (6) en ce qui concerne la composition chimique des flux de gaz (7, 7').

2. Appareil selon la revendication 1, **caractérisé en ce que** le dispositif de production de flux (6) est adapté pour commander une composition chimique du flux de gaz (7, 7'), en particulier pour ajuster une composition chimique définie du flux de gaz (7, 7').

3. Appareil selon l'une quelconque des revendications précédentes, **caractérisé en ce que** le dispositif de production de flux (6) est adapté pour commander une concentration d'au moins un composant du flux de gaz (7, 7'), en particulier dans un composant gazeux.

4. Appareil selon l'une quelconque des revendications précédentes, **caractérisé en ce que** le dispositif de production de flux (6) est adapté pour commander dans le temps le paramètre, en particulier la concentration d'au moins un composant du flux de gaz (7, 7').

5. Appareil selon l'une quelconque des revendications précédentes, **caractérisé en ce que** le dispositif de production de flux (6) est adapté pour commander le paramètre, en particulier la concentration d'au moins un composant du flux de gaz (7, 7'), différemment pour au moins deux couches du matériau de construction (3).

6. Appareil selon l'une quelconque des revendications précédentes, **caractérisé en ce que** le dispositif de production de flux (6) est adapté pour commander le paramètre en alternance pour un nombre défini de couches, en particulier couche par couche.

7. Appareil selon l'une quelconque des revendications précédentes, **caractérisé en ce que** le dispositif de production de flux (6) est adapté pour commander le paramètre, en particulier la concentration d'au moins un composant du flux de gaz (7, 7'), différemment pour une zone noyau (9) et une zone enveloppe (10) de l'objet (2, 2').

8. Appareil selon l'une quelconque des revendications précédentes, **caractérisé en ce que** le dispositif de production de flux (6) est adapté pour commander le paramètre, en particulier la concentration d'au moins un composant du flux de gaz (7, 7'), différemment pour au moins une première étape d'exposition et au moins une deuxième étape d'exposition.

9. Appareil selon l'une quelconque des revendications précédentes, **caractérisé en ce que** le dispositif de production de flux (6) est adapté pour ajouter un composant, en particulier gazeux, au flux de gaz (7, 7').

10. Appareil selon l'une quelconque des revendications précédentes, **caractérisé en ce que** le dispositif de production de flux (6) est adapté pour ajouter le composant au flux de gaz (7, 7') à l'intérieur ou à l'extérieur de la chambre de traitement (5), en particulier dans au moins un tuyau ou canal.

11. Appareil selon l'une quelconque des revendications précédentes, **caractérisé en ce que** le dispositif de production de flux (6) est adapté pour déterminer le paramètre, en particulier la composition du flux de gaz (7, 7'), et pour commander le paramètre, en particulier une concentration d'au moins un composant du flux de gaz (7, 7'), en fonction du paramètre déterminé.

12. Appareil selon l'une quelconque des revendications précédentes, **caractérisé en ce que** le dispositif de production de flux (6) est adapté pour ajuster une concentration d'au moins un composant du flux de gaz (7, 7'), en particulier de chaque composant, déviant d'un minimum.

13. Procédé permettant de faire fonctionner au moins un appareil (1) de fabrication additive d'objets tridimensionnels (2, 2') au moyen d'une exposition sélective successive couche par couche et d'une solidification de couches d'un matériau de construction (3) qui peut être solidifié au moyen d'une source d'énergie, en particulier un appareil (1) selon l'une quelconque des revendications 1 à 13, lequel appareil (1) comprend un dispositif de production de flux (6) qui est adapté pour produire un flux de gaz (7, 7') à l'intérieur d'une chambre de traitement (5) de l'appareil (1), dans lequel au moins un paramètre concernant une composition du flux de gaz (7, 7') est commandé spatialement, et **caractérisé en ce que** le dispositif de production de flux (6) comprend une unité de commande qui est adaptée pour commander la composition du flux de gaz (7, 7'), et **en ce que** le dispositif de production de flux (6) comprend en outre une unité de production de flux (13) qui fournit une admission de flux (14) et une sortie de flux (15), dans lequel l'unité de production de flux (13) est déplacée vers la position de l'objet (2, 2') pour fournir un flux de gaz (7') entre l'admission (14) et la sortie (15) qui diffère du flux de gaz (7) du dispositif de production de flux (6) en ce qui concerne la composition chimique des flux de gaz (7, 7').
